Europäisches Patentamt

European Patent Office

Office européen des brevets

(11) Publication number: **0 148 987**
**B1**

(12) EUROPEAN PATENT SPECIFICATION

(45) Date of publication of patent specification: **13.06.90**

(21) Application number: **84109014.5**

(22) Date of filing: **30.07.84**

(51) Int. Cl.⁵: **B 60 J 1/17**, B 60 J 5/04, B 60 R 13/06

(54) **Construction of a door in motor vehicle.**

(30) Priority: **29.07.83 JP 119491/83 u**

(43) Date of publication of application:
**24.07.85 Bulletin 85/30**

(45) Publication of the grant of the patent:
**13.06.90 Bulletin 90/24**

(84) Designated Contracting States:
**DE FR GB**

(56) References cited:
**DE-A-2 634 778**
**DE-A-2 808 235**
**GB-A-2 115 470**
**US-A-2 024 773**
**US-A-4 219 968**

(73) Proprietor: **TOYOTA JIDOSHA KABUSHIKI KAISHA**
**1, Toyota-cho Toyota-shi**
**Aichi-ken 471 (JP)**

(72) Inventor: **Watanabe, Hiroyuki**
**c/o TOYOTA JIDOSHA KABUSHIKI KAISHA 1,**
**Toyota-cho**
**Toyota-shi Aichi-ken (JP)**
Inventor: **Hamada, Eiichi**
**c/o TOYOTA JIDOSHA KABUSHIKI KAISHA 1,**
**Toyota-cho**
**Toyota-shi Aichi-ken (JP)**
Inventor: **Hayashi, Motomu**
**c/o TOYOTA JIDOSHA KABUSHIKI KAISHA 1,**
**Toyota-cho**
**Toyota-shi Aichi-ken (JP)**
Inventor: **Ono, Kenji**
**c/o TOYOTA JIDOSHA KABUSHIKI KAISHA 1,**
**Toyota-cho**
**Toyota-shi Aichi-ken (JP)**

(74) Representative: **Grams, Klaus Dieter, Dipl.-Ing.**
**et al**
**Patentanwaltsbüro Tiedtke-Bühling-Kinne-**
**Grupe-Pellmann-Grams-Struif Winter-Roth**
**Bavariaring 4**
**D-8000 München 2 (DE)**

Courier Press, Leamington Spa, England.

## Description

The invention relates to a construction of a door in a motor vehicle according to the preamble of claim 1.

Usually, a door glass in a motor vehicle comprises a slider by means of which it is guided in a guide channel during a movement in direction of opening and closing of the door glass. If the door glass comprises only one slider which usually is a bottom or lower slider, the shape of the door glass and the shape of the guide channel do not affect each other. Thus, the door glass and the guide channel may be designed optionally curved or straight without resulting in forced stress during a relative movement between the door glass and the guide channel. A structure of this kind, however, comprising only one slider has a very low stability. To improve the stability of the structure it has been suggested to guide the door glass at least at one end portion thereof in the longitudinal direction of the vehicle by means of an upper slider and a lower slider. Such a structure is shown in DE—A 30 37 397 on which the preamble of claim 1 is based. There may be constraint or impairment of the movement of the door glass if the curvature of the guide channel differs from the curvature of the door glass. This would make a vertical movement of the door glass impossible. Therefore, the guide channel and the door glass between the upper slider and the lower slider extend in parallel to each other. Due to design and air resistance, the door glass usually has a relatively slight curvature and is inclined with respect to a vertical longitudinal plane of the vehicle. Therefore, such a parallel arrangement would result in a relatively wide door due to the outer panel of the main body of the door bulging out. If the shape of the outer panel of the door takes precedence, the door glass is restricted in its curvature.

It is the object of the invention to improve the door construction of the a.m. kind in such a way that while maintaining a firm guiding of the door glass throughout the whole distance, the thickness of the door can be reduced and that the shapes of the door glass and the outer panel of the main body of the door can be selected optionally.

This object is achieved according to the invention by the features in the characterized part of the claim 1.

In such a structure of a door the guide channel is offset inwardly in the direction of the thickness of the door from an extended curve of the door glass into the main body of the door. When designed in this way, the guide channel may have a relatively high curvature as result of which the required width of the door may be narrower than if the guide channel extends in parallel to the door glass. To achieve the required slight curvature of the door glass despite the high curvature of the guide channel, the upper slider and the lower slider are designed in a specific manner according to the invention. Thus, a structure of a door in a motor vehicle has been created in which the door glass is held securely at least at one end by means of a pair of sliders in which case no forced stress will occur when the slider moves in the guide channel although the guide channel does not extend in parallel to the door glass. Both, the curvature of the door glass and the curvature of the guide channel may be selected optionally as a result of which the required width of the door can be reduced.

Advantageous embodiments of the invention are subject matter of the subclaims.

The DE—B 12 10 691 shows a different structure compared to the subject matter of the invention. During a displacement from a lower position the door glass is only guided in the guide channel by means of a lower slider. Another slider, which is not mounted to the top end of the door glass and only has a low distance to the lower slider is not in engagement with the guide channel as a result of which the door glass can be moved without forced stresses. In the upper portion the guide channel is provided with a widened portion so that during the end phase of the movement the slider is guided by the widened portion in a way that the door glass is urged towards the door frame. Since the sliders consist of an elastic material and are only disposed at a low mutual distance, forced stresses at the door glass are prevented in the end phase of the movement.

Description will hereunder be given of the embodiment of the present invention with reference to the drawings.

Fig. 1 is a schematic sectional view showing an embodiment of the construction of the door in a motor vehicle according to the present invention;

Fig. 2 is a schematic sectional view similar to Fig. 1, showing the fully opened state of the door glass; and

Fig. 3 is an enlarged sectional view taken along the line III—III in Fig. 1.

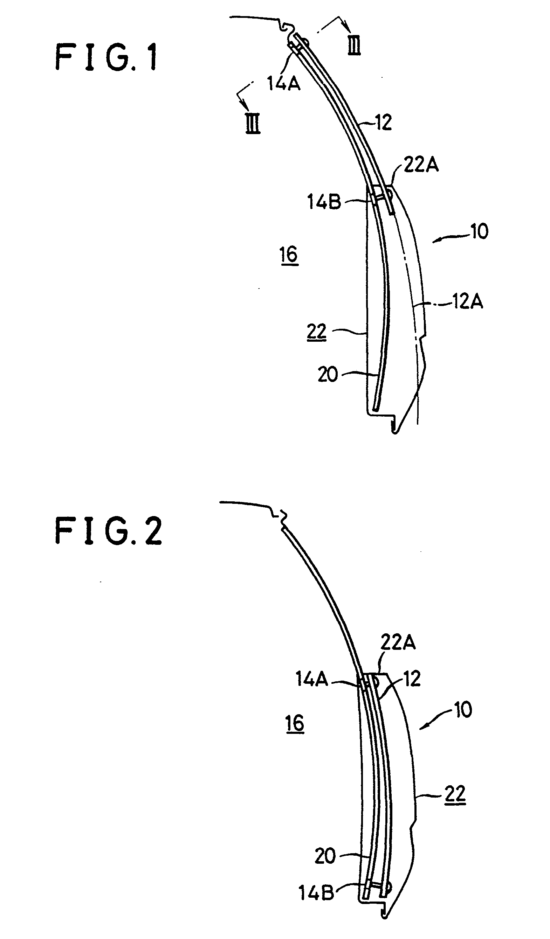

As shown in Figs. 1 to 3, in a construction of a door 10 in a motor vehicle, not generally shown, a slider 14, a sliding portion 15 of which is offset into a compartment 16, is mounted to an end portion 13 of a door glass 12 having an outardly convex essentially constant curvature in the cross section to the vertical line of the door 10. The aforesaid sliding portion 15 of the slider 14 is slidably guided by a guide channel 20 attached to a door frame 18 in direction of opening and closing of the door glass 12, so that the outer surfaces of the door glass 12 and the door frame 18 are made substantially flush with each other. The aforesaid guide channel 20 has a greater curvature than the door glass 12 so that it is inwardly offset in a direction of the thickness of the door 10 from an extended curve of the door glass 12 into the main body of the door 10 in such a manner that the lower the portion of the guide channel 20 is, the more offset inwardly the portion is.

The slider 14 is fastened and fixed to the door glass 12 through a bolt 28, extending through a glass hole 24 formed in the door glass 12, and projecting into the compartment 16 threadably coupled to internal threads 26 formed in the slider 14.

Furthermore, the guide channel 20 is of a substantially C-shape in horizontal cross section and fastened and fixed at the center of an end portion thereof on the side of the compartment 16 to the door frame 18 through a bolt 30 and a nut 32.

Secured to the end portion 13 of the door glass 12 at a further outer position than the slider 14 is a door glass piece 34 being of a substantially crank shape in cross section, having a forward end 35 offset into the compartment 16 and projecting in the direction of the outer end portion 13 of the door glass 12.

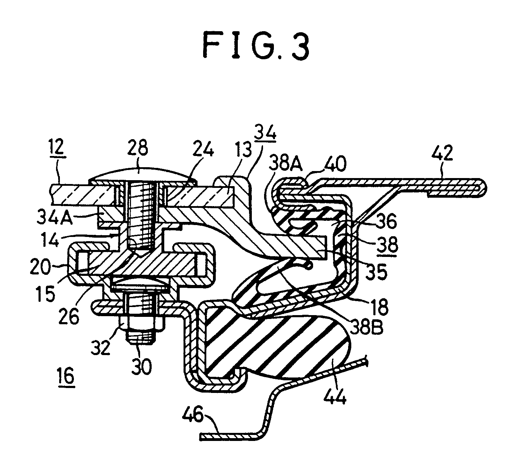

A portion of the door glass piece 34 along the inner surface of the door glass 12 is extended to the left in Fig. 3 at a position where the slider 14 is provided so as to form an extension 34A.

As shown in the drawing, this extension 34A together with the slider 14 are fastened and fixed to the door glass 12 through the bolt 28 at a position between the door glass 12 and the slider 14.

The forward end 35 of the door glass piece 34 projects into a sealing groove 36 formed on the door frame 18 and lips 38A and 38B of a sealing means 38 disposed in the sealing groove 36 are brought into sliding contact with the outer and inner sides of the forward end 35, so that a space formed between the door glass 12 and the door frame 18 can be sealed.

In Fig. 3, there is shown a door molding 40, a door panel 42 welded to the outer surface of the door frame 18, and a door weather strip 44 secured to the door frame 18, and coming into contact with a center pillar 46 when the door 10 is closed, to thereby seal a space formed between the door 10 and the vehicle body.

In the rear side portion of the door 10, the slider 14 includes two sliders 14A and 14B disposed at the substantially top and bottom ends of the door glass 12, respectively.

As for offset values of the sliding portions 15 from the door glass 12 into the compartment 16 at the sliders 14A and 14B, the offset value of the lower slider 14B is larger than the upper slider 14A.

Furthermore, the forward end 35 of the door glass piece 34 and the sealing groove 36 are formed in parallel to the guide channel 20 in the cross section to the vertical line of the door.

Description will hereunder be given of action of the above-described embodiment.

When the door glass 12 is opened from a fully closed state as shown in Fig. 1, the door glass 12, being regulated in its position in the direction of the thickness of the door glass 12 by the guide channel 20 via the slider 14A, 14B and the sliding portion 15, moves downward in the drawing and is received in the main body 22 of door.

At this time, the guide channel 20 is disposed at a position more offset into the compartment 16 than the extended curve 12A of the door glass 12, so that the door glass 12 can be received more inwardly in the vehicle body than in the case where the guide channel 20 is disposed in parallel to the extended curve 12A, thus enabling to reduce the thickness of the main body 22 of door 10.

Furthermore, the door glass piece 34 and the sealing groove 36 are formed in parallel with the guide channel 20, so that the sealing function between the forward end 35 of the door glass piece 34 and the sealing means 38 cannot be impaired when the door glass 12 is opened or closed.

Here, the sealing groove 36 is formed in parallel with the guide channel 20, whereby the sealing groove 36 has different offset values in the direction of the thickness of the door 10 with respect to the outer surface of the door glass 12 at the time of full closing and the outer surface of the door panel 42 depending on the positions in the vertical direction. However, this disadvantage is obviated in such a manner that depths of mounting the door molding 40 are changed depending on the heights thereof, so that the outer surface of the door glass 12 in a fully closed state can be held flush with the outer surface of the door panel 42.

Particularly, in this embodiment, at the upper and lower sliders 14A and 14B, the offset values of the sliding portions 15 from the door glass 12 into the compartment 16 are different from each other, and the offset value of the lower slider 14B is larger than that of the upper slider 14A, so that a displacement of the door glass 12 at the beltline portion 22A at the upper end of the main body 22 of door 10 in the direction of the thickness of the door glass 12 is reduced when the door glass 12 is opened or closed, so that the door glass 12 can be held in contact with the weather strip, not shown, provided on the beltline portion 22A.

## Claims

1. A construction of a door (10) in a motor vehicle, comprising a door glass (12) having an outwardly convex essentially constant curvature in a cross section to the vertical line of said door (10), a pair of sliders (14A, 14B) provided at the substantially top and bottom ends of the door glass (12) at least at one end portion thereof in the longitudinal direction of the vehicle, each slider (14A, 14B) having a sliding portion (15) being offset into a compartment (16), and a guide channel (20) attached to a door frame (18) for slidably guiding said sliding portion (15) of each slider (14A, 14B) in direction of opening and closing of said door glass (12);

characterized in that

said guide channel (20) has a greater curvature than the door glass (12) so that it is inwardly offset in directin of the thickness of said door (10) from an extended curve of said door glass (12) into the main body of said door (10) in such a manner that, the lower a portion of said guide channel (20) is, the more offset inwardly the portion is, and that said door glass (12) with its vertical edges engages with respective sealing means (38) disposed in respective sealing grooves (36) of the door frame (18); and that the offset value of the sliding portion (15) of the lower slider (14B) is larger than that of the upper slider (14A).

2. A construction of a door in a motor vehicle according to claim 1, characterized in that a door glass piece (34) is secured to an end portion (13) of said door glass (12) at a further outer position than said slider (14), said door glass piece (34) being of a substantially crank shape in cross section, having a forward end (35) offset into the compartment (16) and projecting in the direction of the outer end portion (13) of said door glass (12), and that the forward end (35) of said door glass piece (34) is projected into said sealing groove (36) formed in parallel with said guide channel (20) in a cross section to the vertical line of the door (10) and brought into sliding contact with said sealing means (38) disposed in said sealing groove (36), so that a space formed between said door glass (12) and said door frame (18) can be sealed.

3. A construction of a door in a motor vehicle according to claim 2, characterized in that a portion of said door glass piece (34) along the inner surface of said door glass (12) is extended to the center of said door glass (12) at a position where the slider (14) is provided so as to form an extension (34A), and said extension (34A) together with the slider (14) are fastened and fixed to said door glass (12) thorough a bolt (28) at a position between said door glass (12) and said slider (14).

4. A construction of a door in a motor vehicle according to one of the claims 1 to 3, characterized in that a end portion of said door frame (18), which is opposed to the end portion (13) of said door glass (12) and adjacent to the outer surface of said sealing groove (36), is secured thereto by means of a door molding (40) in a manner to be covered from the outer surface to the inner surface of said door frame (18), and an end portion of said door molding (40), which is adjacent to the outer surface of said sealing groove (36), and that depths of mounting of said door molding (40) from its end portion into the vehicle body are varied in the vertical direction in accordance with an offset value of said sealing groove (36) to the outer surface of the door frame (18) in the direction of the thickness of the door (10).

**Patentansprüche**

1. Konstruktion einer Tür (10) in einem Kraftfahrzeug mit einer Türfensterscheibe (12), die eine auswärts konvexe, im wesentlichen konstante Krümmung in einem Querschnitt zu der Vertikallinie der genannten Tür (10) hat, mit einem Paar von Gleitstücken (14A, 14B), die an den im wesentlichen oberen und unteren Enden der Türfensterscheibe (12) wenigstens an einem Endabschnitt von dieser in der Längsrichtung des Fahrzeugs angebracht sind, wobei jedes Gleitstück (14A, 14B) einen in einen Passagierraum (16) hinein versetzten Gleitkörper (15) aufweist, und mit einer an einem Türrahmen (18) befestigten Führungsrinne (20) zur gleitenden Führung des besagten Gleitkörpers (15) eines jeden Gleitstücks (14A, 14B) in einer Öffnungs- sowie Schließrichtung der erwähnten Türfensterscheibe (12);

dadurch gekennzeichnet, daß

die genannte Führungsrine (20) eine größere Krümmung als die Türfensterscheibe (12) hat, so daß sie einwärts in Richtung der genannten Tür (10) von einer verlängerten Kurve der besagten Türfensterscheibe (12) in den Hauptkörper der genannten Tür (10) in der Weise versetzt ist, daß, je tiefer ein Teil der genannten Führungsrinne (20) ist, der Teil umso weiter einwärts verstezt ist, und daß die besagte Türfensterscheibe (12) mit ihren vertikalen Rändern mit jeweiligen, in zugeordneten Abdichtkehlen (36) angeordneten Abdichteinrichtungen (38) in Anlage ist; und daß der Versetzungswert des Gleitkörpers (15) des unteren Gleitstücks (14B) größer ist als derjenige des oberen Gleitstücks (14A).

2. Konstruktion einer Tür in einem Kraftfahrzeug, dadurch gekennzeichnet, daß ein Türscheibenstück (34) an einem Endabschnitt (13) der besagten Türfensterscheibe (12) an einer weiter äußeren Position als das genannte Gleitstück (14) befestigt ist, wobei das erwähnte Türscheibenstück (34) im Querschnitt von einer dem Wesen nach Kurbelgestalt ist, ein vorwärtiges, in den Passagierraum (16) abgesetztes Ende (35) hat sowie in der Richtung des äußeren Endabschnitts (13) der besagten Türfensterscheibe (12) vorragt, und daß das vorwärtige Ende (35) des erwähnten Türscheibenstücks (34) in die Abdichtkehle (36), die parallel mit der besagten Führungsrinne (20) ine inem Querschnitt zu ver Vertikallinie der Tür (10) ausgebildet ist, hineinragend geführt sowie in Gleitanlage mit den erwähnten Abdichteinrichtungen (38), die in der genannten Abdichtkehle (36) angeordnet sind, gebracht ist, so daß ein zwischen der besagten Türfensterscheibe (12) und dem erwähnten Türrahmen (18) gebildeter Raum abgedichtet werden kann.

3. Konstruktion einer Tür in einem Kraftfahrzeug nach Anspruch 2, dadurch gekennzeichnet, daß ein Teil des erwähnten Türscheibenstücks (34) längs der Innenfläche der besagten Türfensterscheibe (12) zum Zentrum dieser Türfensterscheibe (12) an einer Position, an der das Gleitstück (14) vorgesehen ist, so erstreckt ist, um eine Verlängerung (34A) zu bilden, und diese Verlängerung (34A) zusammen mit dem Gleitstück (14) durch einen Schraubenbolzen (28) an einer Position zwischen der besagten Türfensterscheibe (12) sowie dem genannten Gleitstück (14) gehalten und befestigt ist.

4. Konstruktion einer Tür in einem Kraftfahrzeug nach einem der Ansprüche 1 bis 3, dadurch gekennzeichnet, daß ein Endabschnitt des erwähnten Türrahmens (18), der dem Endabschnitt (13) der besagten Türfensterscheibe (12) gegenüberliegt sowie der Außenfläche der genannten Abdichtkehle (36) benachbart ist, außerdem durch ein Tür-Formstück (40) in einer Weise, um von der Außenfläche zur Innenfläche des erwähnten Türrahmens (18) abgedeckt zu sein, und einen Endabschnitt des genannten Tür-Formstücks (40), der an die Außenfläche der genannten Abdichtkehle (36) angrenzt, fest verbunden ist und Tiefen der Befestigung des genannten Tür-Formstücks (40) von seinem Endabschnitt in den Fahrzeugaufbau hinein in der vertikalen Richtung in Übereinstimmung mit einem Versetzungswert der genannten Abdichtkehle (36) zur Außenfläche des Türrahmens (18) in der Richtung der Dicke der Tür (10) unterschiedlich gestaltet sind.

## Revendications

1. Une structure de portière (10) de véhicule automobile, comprenant une vitre de portière (12) présentant une courbure convexe vers l'extérieur essentiellement constante en section transversale par rapport à l'axe vertical de ladite portière (10), deux éléments coulissants (14A, 14B) prévus aux extrémités sensiblement supérieure et inférieure de la vitre (12), au moins à l'une des parties d'extrémité dans le sens longitudinal du véhicule, chaque élément coulissant (14A, 14B) présentant une partie coulissante (15) décalée dans l'habitacle (16), et un canal de guidage (20) fixé à l'encadrement (18) pour guider de façon coulissante ladite partie coulissante (15) de chaque élément coulissant (14A, 14B) dans le sens de l'ouverture et de la fermeture de ladite vitre (12);
   caractérisé en ce que
   ledit canal de guidage (20) présente une courbure plus importante que la vitre (12) de façon à être décalé, vers l'intérieur dans le sens de l'épaisseur de ladite portière (10) par rapport à la courbe prolongée de ladite vitre (12), dans le corps principal de ladite portière (10) de telle manière que, plus la partie dudit canal de guidage (20) est basse, plus cette partie est décalée vers l'intérieur, et que ladite vitre (12) avec ses bords verticaux est en prise avec le moyen d'étanchéité respectif (38) disposé dans les rainures d'étanchéité respectives (36) de l'encadrement de portière (18); et que la valeur de décalage de la partie coulissante (15) de l'élément coulissant inférieur (14B) est plus importante que celle de l'élément coulissant supérieur (14A).

2. Une structure de portière de véhicule automobile selon la revendication 1, caractérisée en ce qu'une pièce (34) de vitre est fixée à une partie d'extrémité (13) de ladite vitre (12) en une position plus extérieure que ledit élément coulissant (14), ladite pièce (34) de vitre étant de section transversale sensiblement en forme de coude ou de manivelle, présentant une extrémité avant (35) décalée dans l'habitacle (16) et faisant saillie ou protubérance dans le sens de la partie d'extrémité extérieure (13) de ladite vitre (12), et en ce que l'extrémité avant (35) de ladite pièce (34) de vitre fait saillie ou protubérance dans ladite rainure d'étanchéité (36) formée parallèlement audit canal de guidage (20) en section transversale par rapport à l'axe vertical de la portière (10) et est portée en contact de coulissement avec des moyens d'étanchéité (38) disposés dans ladite rainure d'étanchéité afin de fermer de façon étanche l'espace formé entre ladite vitre (12) et ledit encadrement de portière (18).

3. Une structure de portière de véhicule automobile selon la revendication 2, caractérisée en ce qu'une partie de ladite pièce (34) de vitre sur la surface interne de ladite vitre (12) s'étend vers le centre de ladite vitre (12) en une position où l'élément coulissant (14) est prévu de façon à former une avancée (34A), et ladite avancée (34A) est montée et fixée conjointement avec l'élément coulissant (14) sur ladite vitre (12) par un boulon (28) en une position située entre ladite vitre (12) et ledit élément coulissant (14).

4. Une structure de portière de véhicule automobile selon une quelconque des revendications 1 à 3, caractérisée en ce qu'une partie d'extrémité dudit encadrement de portière (18), qui est opposée à la partie d'extrémité (13) de ladite vitre (12), et adjacente à la surface extérieure de ladite rainure d'étanchéité (36), est fixée au moyen d'une moulure de portière (40) de façon à être recouverte à partir de la surface extérieure vers la surface intérieure dudit encadrement (18), et plus particulièrement au moyen d'une partie d'extrémité de ladite moulure de portière (40), qui est adjacente à la surface extérieure de ladite rainure d'étanchéité (36), et en ce que les profondeurs de montage de ladite moulure de portière (40) par rapport à sa partie d'extrémité dans la caisse de véhicule varient dans le sens vertical, en fonction de la valeur de décalage de ladite rainure d'étanchéité (36) par rapport à la surface extérieure de l'encadrement de portière (18) dans le sens de l'épaisseur de celle-ci.

FIG.1

FIG.2

1

# FIG. 3